# EUROPÄISCHE PATENTSCHRIFT

(11) **EP 2 556 999 B1**
(45) Veröffentlichungstag und Bekanntmachung des Hinweises auf die Patenterteilung: **09.09.2015**
(21) Anmeldenummer: 12005085.1
(22) Anmeldetag: 10.07.2012
(51) Int. Cl.: B60R 16/02, H02G 1/08

(54) **Einführhilfe für Kabel**
Aide à l'introduction pour câble
Insertion aid for cables

(30) Priorität: 09.08.2011 DE 102011109766
(43) Veröffentlichungstag der Anmeldung: 13.02.2013
(73) Patentinhaber: Lipsticks Sportprodukte GmbH, 85221 Dachau (DE)
(72) Erfinder: Pertramer, Siegfried, 80638 München (DE)
(74) Vertreter: von Bülow, Tam

(56) Entgegenhaltungen:
- DE-A1- 4 200 865
- DE-A1- 10 308 997
- US-A- 3 551 959
- US-A1- 2010 258 771

## Beschreibung

Die Erfindung bezieht sich auf eine Einführhilfe für Kabel. Solche Einführhilfen werden insbesondere in der Automobilindustrie zum Verlegen von Kabeln und Kabelbäumen in der Autokarosserie eingesetzt.

Eine in der DE 299 07 792 U1 beschriebene Einführhilfen hat einen langgestreckten Schlauch aus Textilmaterial, in den der zu verlegende Kabelbaum eingelegt wird. Der Schlauch besteht dort aus mehrlagigem Textilmaterial. Das in Einfädelrichtung vordere Ende des Schlauches ist mit einem langgestreckten elastisch verbiegbaren Einführelement verbunden. Die Art der Verbindung ist dort nicht näher beschrieben.

Die DE 103 08 997 A1 zeigt eine Einführhilfen mit einen langgestreckten Schlauch aus Textilmaterial, in den der zu verlegende Kabelbaum eingelegt wird. Der Schlauch hat einen Reißverschluss oder einen Klettverschluss. Das in Einfädelrichtung vordere Ende des Schlauches ist mit einem langgestreckten elastisch verbiegbaren Einführelement verbunden. Ein umgestülptes Ende des Schlauches ist verschlossen und umgreift ein verdicktes Endstück des Einführelementes, um so den Schlauch mit dem Einführelement zu verbinden. Das dortige Einführelement ist als Vorfädeldraht oder Rohr ausgebildet.

Die US 3,551,959 A beschreibt ein mit einer Tülle versehenes Ende eines geradlinigen Körpers bzw. einer Stange, das mit einem Kettenspanner oder einem Buchsengehäuse verbunden werden kann, der bzw. das mit einer Gewindeschraube gespannt werden kann.

Zum besseren Einfädeln von Kabelbäumen ist aus der DE 35 24 076 C2 bekannt, das zu verlegende Leitungskabel mit einem Führungsaufsatz zu verbinden, der in seinem vorderen Ende keilförmig ausgebildet ist.

Die DE 8708258 U1 zeigt eine Schutzvorrichtung für ein Kabelende, die als starre länglich gestreckte, einseitig geschlossene Hülse ausgebildet ist, wobei das Kabelende in der Hülse anzuordnen ist.

In der Praxis und insbesondere im Automobilbau werden die benötigten Kabelbäume von externen Zulieferfirmen gefertigt und zusammen mit der bestückten Einführhilfe an weiter verarbeitende Unternehmen geliefert. Nach dem Verlegen der Kabelbäume werden die Einführhilfen entfernt und an den Zulieferanten zurückgesandt. Je nach Anwendungsfall der Kabelbäume müssen die Einführelemente unterschiedliche Länge haben. Weiter haben die Kanäle, in die die Kabelbäume verlegt werden, unterschiedliche Größen und Formen bzw. Verläufe, so daß es wünschenswert ist, die Einführelemente an die individuellen Anforderungen anpassen zu können. Die Einführelemente sollen leicht und ohne Verhaken eingeschoben werden können. Weiter soll der Kabelbaum samt dem Schlauch aus Textilmaterial über das Einführelement an die richtige Position gezogen werden können und schließlich soll nach richtiger Platzierung des Kabelbaumes die Einführhilfe entfernt werden können, während der Kabelbaum an der verlegten Stelle verbleibt.

Um all diese Anforderungen zu erfüllen hat man nach internem Stand der Technik der Anmelderin eine Vielzahl von unterschiedlichen Einführelementen unterschiedlicher Länge verwendet, die mit Kabelbindern an dem Schlauch aus Textilmaterial befestigt wurden.

Aufgabe der Erfindung ist es daher die Einführhilfe der eingangs genannten Art dahingehend zu verbessern, daß sie einfach an die individuellen Gegebenheiten anpaßbar ist und ein einfaches und sicheres Einführen von Kabeln bzw. Kabelbäumen ermöglicht.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Die Grundidee der Erfindung liegt darin, den Schlauch und das Einführelement durch ein Verbindungselement miteinander zu koppeln, das so ausgebildet ist, dass die Länge des Einführungselementes und/oder die Länge eines Gurtes, der den Schlauch mit dem Verbindungselement verbindet, einstellbar ist.

Selbstverständlich sind alle Verbindungen an dem Verbindungselement reißfest ausgebildet und das Verbindungselement ist so geformt, dass es "stromlinienförmig" ist und sich an Ecken, Kanten oder Biegungen von Hohlräumen, in die das Kabel eingeführt werden soll, nicht verhaken kann.

Vorzugsweise ist die Verbindung zwischen dem Einführelement und dem Verbindungselement formschlüssig.

Im folgenden wird die Erfindung anhand der Zeichnung im Zusammenhang mit mehreren Ausführungsbeispielen ausführlicher erläutert. Es zeigt:
- Fig. 1: eine teilweise abgeschnittene perspektivische Darstellung eines Ausführungsbeispieles der Einführungshilfe nach der Erfindung;
- Fig. 2: eine perspektivische Ansicht eines Verbindungselementes für die Verbindung zwischen dem Einführelement und dem Schlauch nach einem ersten Ausführungsbeispiel der Erfindung;
- Fig. 3, 4 und 5: eine perspektivische Ansicht, einen Quer-schnitt und eine schematische TeilSeitenansicht des Verbindungselementes nach dem ersten Ausführungsbeispiel der Erfindung;
- Fig. 6, 7 und 8: perspektivische Ansichten des Verbindungs-elementes nach einem zweiten Ausführungsbei-spiel der Erfindung;
- Fig. 9: eine perspektivische Ansicht des Verbindungselementes nach einem dritten Ausführungsbeispiel der Erfindung;
- Fig. 10: eine perspektivische Darstellung eines vierten Ausführungsbeispieles der Einführungshilfe nach der Erfindung; und
- Fig. 11: eine perspektivische Ansicht der Einführungshilfe der Fig. 10 in geöffnetem Zustand.

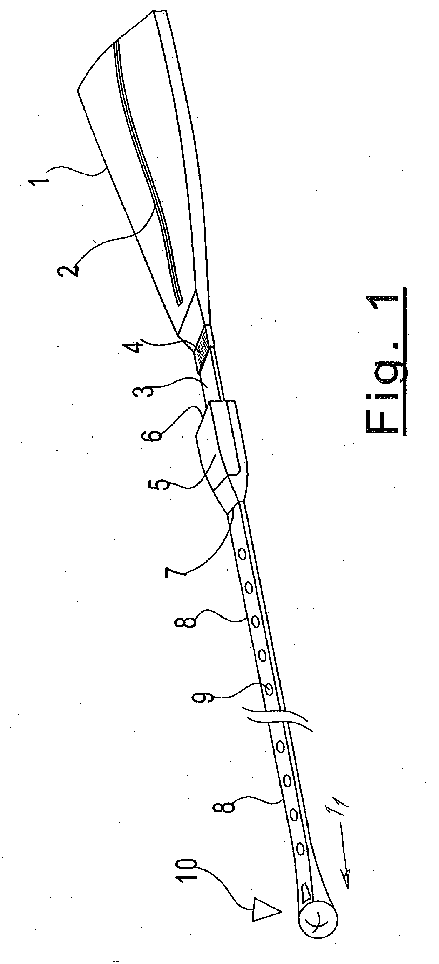

Die Fig. 1 zeigt einen Abschnitt eines Schlauches 1 aus Textilmaterial, in dessen Inneren ein nicht dargestelltes Kabel bzw. ein Kabelbaum angeordnet ist. Der Schlauch kann durch einen Reißverschluss oder Klettverschluss geöffnet bzw. geschlossen werden. Ein Ende des Schlauches 1 ist mit einem Gurt 3 verbunden und zwar vorzugsweise durch eine Naht 4. Der Gurt ist aus flexiblem Textilmaterial. Der Gurt 3 ist mit einem Verbindungselement 5 verbunden und zwar indem er in ein schlauchseitiges Ende 6 des Verbindungselementes 5 eingesteckt ist. Dabei ist der Gurt 3 formschlüssig oder reibschlüssig mit dem Verbindungselement 5 verbunden, was weiter unten erläutert wird.

An das andere Ende 7 des Verbindungselementes 5, das in Einführrichtung weist, ist ein Einführelement 8 angeschlossen, das als langgestreckter, elastisch verbiegbarer Kunststoffkörper ausgebildet ist. Es handelt sich hierbei um ein flaches Band aus Kunststoffmaterial, das in Längsrichtung eine solche Steifigkeit hat, dass es von seinem hinteren Ende, das mit dem Verbindungselement 5 verbunden ist, durch schmale Hohlräume oder Rohre vorgeschoben werden kann, ohne dabei abzuknicken. Auch ist es so stabil, dass es erhebliche Zugkräfte übertragen kann, die für das Einziehen eines Kabelbaumes samt den Schlauch 1 durch enge Rohre oder Hohlräume ermöglicht. Das Einführelement 8 hat in seiner Längserstreckung eine Vielzahl von Löchern 9. Ein in Einführrichtung weisendes Ende des Einführelementes 8 ist mit einem verdickten abgerundeten Kopf 10 versehen.

Das Verbindungselement 5 ist in Einführrichtung, die durch einen Pfeil 11 dargestellt ist, spitz zulaufend und glattflächig ausgebildet, so dass es sich beim Einführen in enge Hohlräume nicht verhaken kann. Durch Rundungen ist es auch "stromlinienförmig" gestaltet. Der Schlauch 1 kann zum Einlegen eines Kabels oder Kabelbaumes geöffnet werden, was durch einen Reißverschluss 2 oder einen Klettverschluss erfolgt, der sich in Längsrichtung des Schlauches 1 erstreckt.

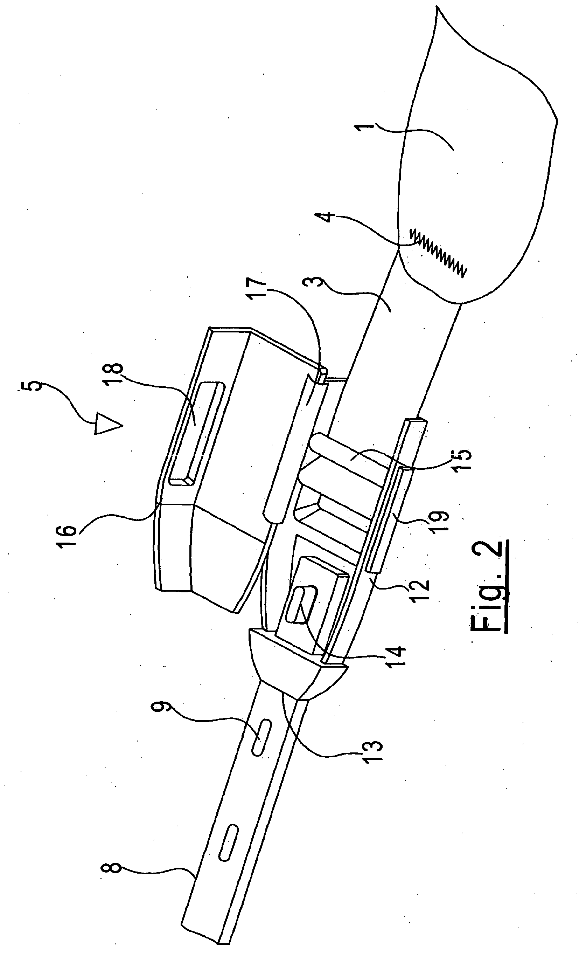

Fig. 2 zeigt ein erstes Ausführungsbeispiel eines Verbindungselementes 5 zur Verbindung des Einführelementes 8 mit dem Schlauch 1. Bei diesem Ausführungsbeispiel ist sowohl die Länge des Einführelementes 8 als auch die Länge des Gurtes 3 einstellbar.

Das Verbindungselement 5 ist ein Kunststoffteil mit einem Grundkörper 12, der eine Einführöffnung 13 für das Einführelement 8 aufweist und im Inneren einen Zapfen 14 hat, der an die Form der Löcher 9 angepasst ist. Das Einführelement 8 wird für den jeweiligen Anwendungsfall auf die gewünschte Länge abgeschnitten, in die Einführöffnung 13 eingeführt und mit seinem letzten Loch 8 über den Zapfen 14 gestülpt womit es formschlüssig an dem Verbindungselement 5 gehalten ist.

Weiter hat das Verbindungselement 5 Stege 15, durch die der Gurt 3 gefädelt werden kann, wodurch er reibschlüssig mit dem Verbindungselement 5 verbunden ist.

Damit ist auch die wirksame Länge des Gurtes 3 einstellbar und zwar stufenlos.

Das Verbindungselement 5 hat einen Deckel 16, der über ein Scharnier 17 mit dem Grundkörper 12 verbunden ist. Das Scharnier 17 kann beispielsweise ein Filmscharnier sein, so dass das gesamte Verbindungselement 5 einstückig aus Kunststoff gespritzt sein kann. Nach Einführen und Fixieren des Einführelementes 8 mittels des Zapfens 14 und des jeweiligen Loches 9 sowie Einfädeln des Gurtes 3 an den Stegen 15 kann der Deckel 16 zugeklappt werden und mit einer Öffnung 18 in eine Rastnase 19 einrasten, wodurch das Einführelement 5 geschlossen wird und alle Teile fixiert sind.

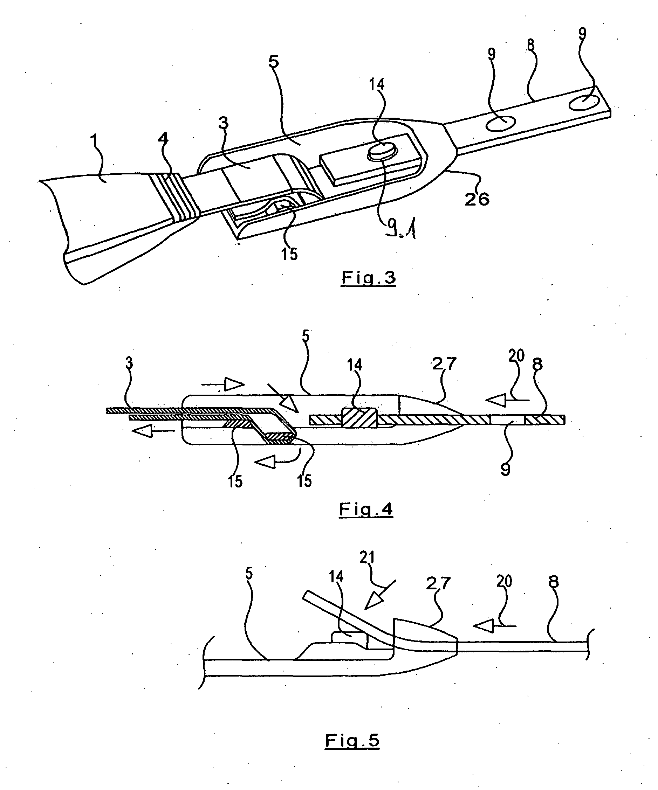

Die Fig. 3 bis 5 zeigen das Ausführungsbeispiel der Fig. 2 detaillierter. In den Fig. 3 bis 5 ist der Deckel fortgelassen. In den Fig. 3 und 4 ist deutlicher abgebildet, wie der Gurt 3 eingefädelt und um die Stege 15 herumgeführt ist, um eine stufenlose einstellbare Verbindung zwischen dem Gurt 3 und dem Verbindungselement 5 zu schaffen.

In Fig. 5 ist abgebildet, wie das Einführelement 8 nach Einführen in Richtung des Pfeiles 20 angehoben und durch Absenken in Richtung des Pfeiles 21 auf den Zapfen 14 gestülpt wird, um eine formschlüssige Verbindung zu schaffen. Die Verbindung zwischen dem Einführelement 8 und dem Verbindungselement 5 erfolgt über den Zapfen 14 und das letzte Loch 9.1 der Lochreihe.

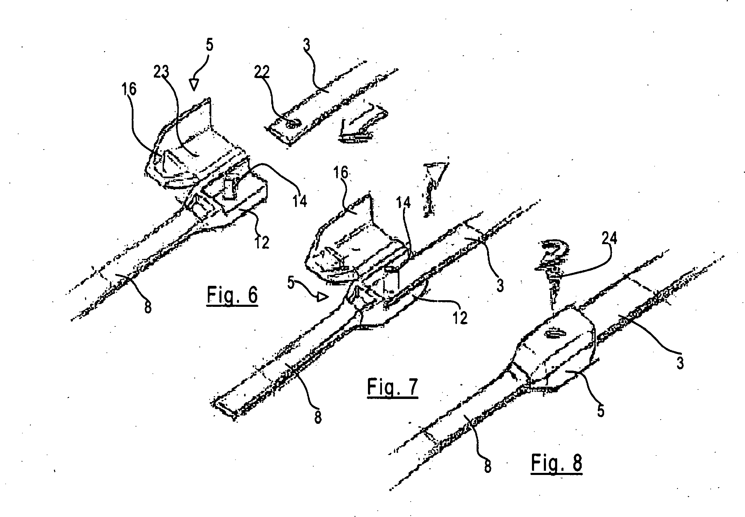

Bei dem Ausführungsbeispiel der Fig. 6 bis 8 werden sowohl der Gurt 3 als auch das Einführelement 8 an dem Zapfen 14 des Verbindungselementes 5 gehalten. Der Gurt 3 hat an seinem Ende ein Loch 22, das an Größe und Form des Zapfens 14 angepasst ist. Der Deckel 16 hat gegenüberliegend zu dem Zapfen 14 ein Loch 23 und kann durch eine Schraube 24, die durch das Loch 23 in die Stirnseite des Zapfens 14 eingeschraubt wird, fixiert werden.

Es sei darauf hingewiesen, dass diese Art der Deckelbefestigung auch bei den Ausführungsbeispielen der Fig. 2 bis 5 verwendet kann. Umgekehrt kann die Verriegelung des Deckels gemäß dem Ausführungsbeispiel der Fig. 2 auch bei dem Ausführungsbeispiel der Fig. 6 bis 8 verwendet werden.

Eine Untervariante des Ausführungsbeispieles der Fig. 6 bis 8 besteht darin, dass das Einfuhrelement 8 an das Verbindungselement 5 angespritzt ist. Die Länge des Einführelementes 9 ist bei dieser Variante nicht veränderbar. Dagegen ist die Länge des Gurtes 3 veränderbar, in dem man den Gurt 3 auf die gewünschte Länge abschneidet und an seinem freien Ende das Loch 22 anbringt.

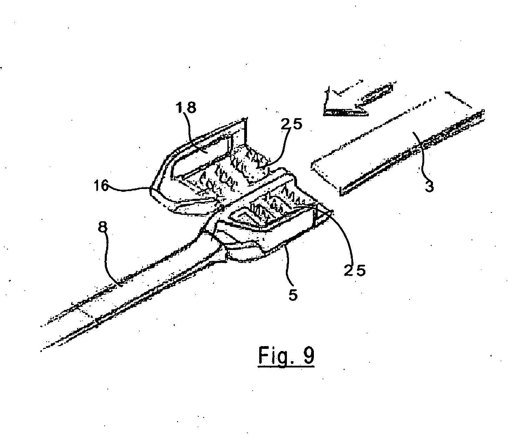

Beim Ausführungsbeispiel der Fig. 9 sind am Grundkörper 12 des Verbindungselementes 5 und am Deckel 16 jeweils spitze Zähne 25 angebracht, die beim Schließen des Deckels 16 in das Material des Gurtes 3 eindringen und diesen damit formschlüssig an dem Verbindungselement 5 halten. Der Gurt 3 wird vorher auf die gewünschte Länge abgeschnitten. Auch bei diesem Ausführungsbeispiel kann das Einführelement 8 entweder an das Verbindungselement angespritzt sein oder analog dem Ausführungsbeispiel der Fig. 2 bis 5 in das Verbindungselement eingeführt und durch die spitzen Zähne 25 zusammen mit dem Gurt 3 fixiert werden. In letzterem Fall hat das Einfuhrelement vorzugsweise Perforationen entsprechend dem Muster der Zähne 25.

Die Verriegelung des Deckels ist bei Fig. 9 entsprechend dem Ausführungsbeispiel der Fig. 2 gestaltet, d.h. mit dem Rastvorsprung 19 am Grundkörper 12 und der Öffnung 18 am Deckel 16. Auch hier ist aber eine Schraubverbindung entsprechend dem Ausführungsbeispiel der Fig. 6 bis 8 möglich. Am Grundkörper 12 ist dann eine Materialanhäufung für die Aufnahme der Schraube 24 vorzusehen.

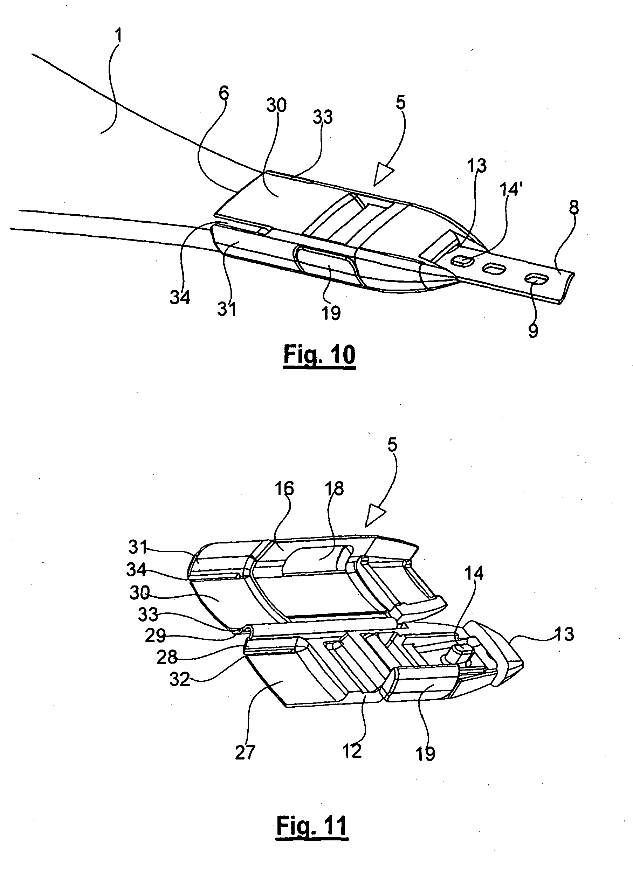

Das Ausführungsbeispiel der Fig. 10 und 11 unterscheidet sich von dem der Fig. 1 im Wesentlichen darin, dass das Verbindungselement 5 in Richtung zu dem Schlauch 1 so weit verlängert ist, dass die in Fig. 1 als Naht 4 gezeigte Verbindungsstelle zwischen dem Gurt 3 und dem Schlauch 1 in das Innere des Verbindungselementes 5 hineinragt. Dadurch wird ein glatter Übergang zwischen dem Verbindungselement 5 und dem Schlauch 1 geschaffen und ein Verhaken des Übergangsbereiches zwischen dem Schlauch 1 und dem Verbindungselement 5 beim Einfädeln in einen Hohlraum vermieden wird.

Die Verlängerung des Verbindungselementes 5 erfolgt durch einstückig angeformte Laschen 27, 28, 29, 30, 31, die gegenüber der jeweils benachbarten Lasche durch einen Schlitz 32, 33, 34 abgetrennt sind, so dass jede der Laschen 27-31 für sich flexibel ist und sich das schlauchseitige Ende 6 des Verbindungselementes glatt an die Kontur des Schlauches 1 anschmiegen kann.

Zur Verbindung zwischen dem Einführelement 8 und dem Verbindungselement 5 können auch zwei Zapfen 14 und 14' vorgesehen sein, von denen der Zapfen 14 bei geschlossenem Deckel 16 im Inneren des Verbindungselementes 5 liegt, während der zweite in Fig. 10 gezeigte Zapfen 14' nicht vom Deckel 16 abgedeckt ist und am vorderen zum Einführelement 8 weisenden Ende des Verbindungselementes 5 liegt. Der Abstand der beiden Zapfen 14 und 14' entspricht dem Abstand der Löcher 9 an dem Einführelement. Es sei jedoch darauf hingewiesen, dass das Ausführungsbeispiel der Fig. 10 und 11 nicht auf die Verwendung von zwei Zapfen 14 und 14' eingeschränkt ist und dass auch bei diesem Ausführungsbeispiel nur ein Zapfen verwendet werden kann.

Bei allen dargestellten Ausführungsbeispielen ist der zum Einfuhrelement 8 weisende in Einführrichtung vordere Bereich des Verbindungselementes 5 spitz zulaufend auszugestalten und vorzugsweise sowohl in der von dem Einfuhrelement 8 gebildeten Ebene als auch einer senkrecht dazu stehenden Ebene mit Rundungen 26 und 27 versehen, um ein Festklemmen oder Verhaken des Verbindungselementes 5 während des Einführens in Hohlräume zu verhindern.

Weiter sei darauf hingewiesen, dass bei allen dargestellten Ausführungsbeispielen die im Zusammenhang mit den Fig. 10 und 11 beschriebene Verlängerung mit den Laschen 27-31 angewandt werden kann. Auch ist darauf hinzuweisen, dass das Einführelement 8 nicht notwendigerweise eine Reihe von Löchern 9 haben muss. Es genügt in der Praxis, das Einführelement 8 jeweils auf die gewünschte Länge zuzuschneiden und dann im Bereich eines Endes des Einführelementes 8 nur ein oder zwei Löcher 9 vorzusehen mittels derer das Einführelement 9 über den Zapfen 14 oder die Zapfen 14 und 14' mit dem Verbindungselement 5 verbunden wird. Das Einführelement 8 ist dann glatt und es besteht keine Gefahr, dass es durch die Materialschwächung durch die Löcher 9 gerade bei Biegungen mit sehr kleinem Krümmungsradius brechen oder reißen kann.

Abschließend sei noch einmal darauf hingewiesen, dass die verschiedenen Befestigungsmöglichkeiten des Gurtes 3 und des Einführelementes 8 miteinander kombiniert werden können. Für die Befestigungsmöglichkeit des Einführelementes am Verbindungselement gibt es somit die drei Möglichkeiten:
a) am Zapfen;
b) Anspritzen am Verbindungselement und
c) Festklemmen mit Zähnen.

Für die Befestigung des Gurtes 3 am Verbindungselement 5 gibt es die drei Möglichkeiten:
a) Durchfädeln an den Stegen;
b) Einhängen am Zapfen und
c) Festklemmen mit den Zähnen 25.

Somit ergeben sich hierfür neun Kombinationsmöglichkeiten. Weiter können diese neun Kombinationsmöglichkeiten mit den beiden offenbarten Varianten der Befestigung des Deckels kombiniert werden.

Zusammenfassend schafft die Erfindung eine einfach an die jeweiligen Anforderungen anpassbare Einführhilfe. Sie ist wiederverwendbar und kann ohne großen Aufwand bei weiteren Verwendungen modifiziert werden und ist somit universell einsetzbar. Bei der Variante der Erfindung, bei der der Deckel mit einem Rastverschluss verriegelt wird, kann die Anpassung auch vollständig ohne Werkzeuge vorgenommen werden.

## Patentansprüche

1. Einführhilfe für Kabel mit einem Schlauch (1) aus Textilmaterial, der mit einem langgestreckten elastisch verbiegbaren Einführelement (8) verbunden ist,
**dadurch gekennzeichnet, dass** ein Verbindungselement (5) vorgesehen ist, an dem das Einführelement (8) und direkt oder indirekt der Schlauch (1) befestigt sind und dass mindestens eine der Befestigungen so ausgestaltet ist, dass die Länge der Einführhilfe vom Einführende des Einführungselementes (8) zu einem dem Verbindungselement (5) zugewandten Ende des Schlauches (1) einstellbar ist.

2. Einführhilfe nach Anspruch 1, **dadurch gekennzeichnet, dass** der Schlauch (1) über einen flexiblen Gurt (3) mit dem Verbindungselement (5) verbunden ist.

3. Einführhilfe nach Anspruch 2, **dadurch gekennzeichnet, dass** das Verbindungselement (5) und/oder der Gurt (3) formschlüssig mit dem Verbindungselement (5) verbunden ist.

4. Einführhilfe nach Anspruch 3, **dadurch gekennzeichnet, dass** das Verbindungselement (5) einen von einem Grundkörper (12) abstehenden Zapfen (14) aufweist und dass das Einführelement (8) und/oder der Gurt (3) eine an die Form des Zapfens (14) angepasste Öffnung (9, 22) aufweisen, die den Zapfen (14) übergreifen.

5. Einführhilfe nach Anspruch 3, **dadurch gekennzeichnet, dass** das Verbindungselement (5) eine Vielzahl von spitzen Zähnen (25) aufweist, die den Gurt (3) und/oder das Einführelement (8) formschlüssig an dem Verbindungselement (5) halten.

6. Einführhilfe nach einem der Ansprüche 2 bis 4, **dadurch gekennzeichnet, dass** das Verbindungselement (5) Stege (15) aufweist zum Durchfädeln und reibschlüssigen Halten des Gurtes (3) an dem Verbindungselement (5).

7. Einführhilfe nach einem der Ansprüche 1 bis 6, **dadurch gekennzeichnet, dass** das Einführelement (8) an das Verbindungselement (5) angespritzt ist.

8. Einführhilfe nach einem der Ansprüche 1 bis 7, **dadurch gekennzeichnet, dass** das Verbindungselement (5) einen schwenkbar an einem Grundkörper (12) angebrachten Deckel (16) aufweist.

9. Einführhilfe nach einem der Ansprüche 1 bis 8, **dadurch gekennzeichnet, dass** das Verbindungselement (5) im Übergangsbereich zu dem Einführelement (8) spitz zulaufend ausgebildet ist.

10. Einführhilfe nach einem der Ansprüche 1 bis 9, **dadurch gekennzeichnet, dass** das Verbindungselement (5) an seinem zum Schlauch (1) weisenden Ende (6) durch flexible Laschen (27-31) so weit verlängert ist, dass das zum Verbindungselement (5) weisende Ende des Schlauches (1) von den Laschen (27-31) überdeckt ist.

11. Einführhilfe nach Anspruch 10, **dadurch gekennzeichnet, dass** benachbarte Laschen (27-31) durch einen Schlitz (32-34) voneinander getrennt sind.

## Claims

1. Inlet aid for cables with a hose (1) made of textile material that is connected with an enlongated, elastically bendable inlet element (8),
**characterized in that** a connection element (5) is provided at which the inlet element (8) and directly or indirectly the hose (1) is fixed and that at least one of the fixings is formed **in that** a length of the insertion aid is adjustable from an insertion end of the inlet element (8) to an end of the hose (1) that is turned towards the connection element (5).

2. Inlet aid according to claim 1, **characterized in that** the hose (1) is connected to the connection element (5) via a flexible strap (3).

3. Inlet aid according to claim 2, **characterized in that** the connection element (5) and/or the strap (3) is connected with the connection element (5) in a form-locking way.

4. Inlet aid according to claim 3, **characterized in that** the connection element (5) comprises a tappet (14) that protrudes from a base body (12) and that the inlet element (8) and/or the strap (3) comprises an opening (9, 22) that is fitted to the shape of the tappet (14) that overlap the tappet (14).

5. Inlet aid according to claim 3, **characterized in that** the connection element (5) comprises a plurality of peaked teeth (25) that hold the strap (3) and/or the inlet element (8) at the connection element (5) in a form-locking way.

6. Inlet aid according to one of the claims 2 to 4, **characterized in that** the connection element (5) comprises bars (15) for running in and holding the strap (3) at the connection element (5) in a frictionally engaged way.

7. Inlet aid according to one of the claims 1 to 6, **characterized in that** the inlet element (8) is injected to the connection element (5).

8. Inlet aid according to one of the claims 1 to 7, **characterized in that** the connection element (5) comprises a cover (16) that is mounted to a base body (12) in a pivotable way.

9. Inlet aid according to one of the claims 1 to 8 **characterized in that** the connection element (5) is formed spiry in the transfer zone to the inlet element (8).

10. Inlet aid according to one of the claims 1 to 9, **characterized in that** the connection element (5) is prolonged at its end that is turned towards the hose (1) by flexible fishplates (27-31) until the end of the hose (1) that is directed to the connection element (5) is covered by the fishplates (27-31).

11. Inlet aid according to claim 10, **characterized in that** neighboring fishplates (27-31) are separated from each other by a slot (32-34).

## Revendications

1. Dispositif d'insertion pour câble, avec un tube (1) en matière textile relié à un élément d'insertion allongé élastiquement flexible (8),
**caractérisé en ce qu'**un élément de connexion (5) est prévu, auquel sont fixés l'élément d'insertion (8) et directement ou indirectement le tube (1), et **en ce que** au moins une des fixations est configurée de telle sorte que la longueur du dispositif d'insertion est réglable de l'extrémité finale de l'élément d'insertion (8) à l'extrémité du tube (1) orientée vers l'élément de connexion (5).

2. Dispositif d'insertion selon la revendication 1, **caractérisé en ce que** le tube (1) est relié à l'élément de connexion (5) par une sangle flexible (3).

3. Dispositif d'insertion selon la revendication 2, **caractérisé en ce que** l'élément de fixation (5) et/ou la sangle (3) est relié à l'élément de connexion (5) par complémentarité de forme.

4. Dispositif d'insertion selon la revendication 3, **caractérisé en ce que** l'élément de connexion (5) comporte un têton (14) faisant saillie d'un corps de base (12) et **en ce que** l'élément d'insertion (8) et/ou la sangle (3) comportent une ouverture (9, 22) adaptée à la forme du téton (14), qui s'engage sur le téton (14).

5. Dispositif d'insertion selon la revendication 3, **caractérisé en ce que** l'élément de connexion (5) comporte une pluralité de dents pointues (25), qui retiennent la sangle (3) et/ou l'élément d'insertion (8) sur l'élément de connexion (5) par complémentarité de forme.

6. Dispositif d'insertion selon l'une des revendications 2 à 4, **caractérisé en ce que** l'élément de connexion (5) comporte des traverses (15) pour enfiler et retenir par friction la sangle (3) sur l'élément de connexion (5).

7. Dispositif d'insertion selon l'une des revendications 1 à 6, **caractérisé en ce que** l'élément d'insertion (8) est injecté sur l'élément de connexion (5).

8. Dispositif d'insertion selon l'une des revendications 1 à 7, **caractérisé en ce que** l'élément de connexion (5) comporte un couvercle pivotant (16) fixé à un corps de base (12).

9. Dispositif d'insertion selon ['une des revendication 1 à 8, **caractérisé en ce que** l'élément de connexion (5) se termine en pointe dans la zone de transition vers l'élément d'insertion (8).

10. Dispositif d'insertion selon l'une des revendications 1 à 9, **caractérisé en ce que** l'élément de connexion (5) est prolongé à son extrémité (6) faisant face au tube (1) par des languettes flexible (27-31), à tel point que l'extrémité du tube (1) faisant face à l'élément de connexion (5) est recouverte par les languettes (27-31).

11. Dispositif d'insertion selon la revendication 10, **caractérisé en ce que** les languettes voisines (27-31) sont séparées les unes des autres par une fente (32-34).
